# EUROPEAN PATENT SPECIFICATION

(11) **EP 2 977 658 B1**
(45) Date of publication and mention of the grant of the patent: **03.10.2018**
(21) Application number: 14178213.6
(22) Date of filing: 23.07.2014
(51) Int. Cl.: F16K 11/16

(54) **Valve for a fluid treatment apparatus and method and system for operating the valve**
Ventil für eine Fluidbehandlungsvorrichtung und Verfahren und System zum Betrieb des Ventils
Soupape pour un appareil de traitement de fluide, procédé et système permettant de faire fonctionner la soupape

(43) Date of publication of application: 27.01.2016
(73) Proprietor: Brita GmbH, 65232 Taunusstein (DE)
(72) Inventor: Weidner, Peter, 92444 Rötz (DE); Razin, Denis, 65199 Wiesbaden (DE); Nagel, Thomas, 35796 Weinbach (DE); Hörning, Thomas, 65529 Waldems (DE); Freystedt, Bernd, 65187 Wiesbaden (DE); Buiter, Joris, 65232 Taunusstein (DE); But, Alexej, 49846 Hoogstede (DE); Zöller, Jochen, 56355 Nastätten (DE)
(74) Representative: van Lookeren Campagne, Constantijn August

(56) References cited:
- WO-A1-2009/101188
- DE-A1-102012 022 238
- DE-A1-102012 214 845
- DE-B3-102007 019 064
- DE-B3-102009 004 157

## Description

The invention relates to a valve for a fluid treatment apparatus, including:
a body, having formed therein at least one first port and at least two second ports; and
a regulating device positioned between the first and second ports in flow sense and including:
   a first part for occluding a path between the first port and a first of the second ports to an extent determined by a position along a range of positions of the first part,
   a second part for occluding a path between the first port and a second of the second ports to an extent determined by a position along a range of positions of the second part and
   a control member for adjusting the position of the first part in either of opposite directions along the range,
wherein the degrees of occlusion by each of the first and second parts vary stepwise with their respective positions along the respective ranges.

The invention also relates to a method of operating such a valve.

The invention also relates to a system for operating such a valve.

The invention also relates to a fluid treatment apparatus including such a valve.

WO 2009/101188 A1 discloses an apparatus for treating liquids that comprises a container with treatment material, e.g. filter material. Untreated liquid is supplied to the container by a supply conduit via a blending valve and a first connecting conduit. The treated liquid is supplied to a discharge conduit via a second connecting conduit. A bypass conduit is provided between the blending valve and the discharge conduit. The blending valve is provided with a valve body, in which an inlet channel and two outlet channels are arranged. The inlet channel is connected to the two outlet channels via an adjustment element, which is provided with adjustment means. The adjustment means are realised as a first and second adjustment ring and arranged in front of the inlet openings of the two outlet channels. There is no adjustment ring at the outlet opening of the inlet channel, so that raw water flowing in can flow into the receiving chamber of the adjustment element unimpeded. The two adjustment rings are arranged on a coupling means in the form of a connecting pin. The first adjustment ring may be an integral device of the connecting pin, whereas the second adjustment ring is preferably mounted on the connecting pin and connected to it in a non rotatable manner. The connecting pin terminates at its upper end in an operating section in the form of a hexagon socket, into which a corresponding key for adjusting the adjustment element can be inserted. Each adjustment ring has a profiled and a non-profiled end face. The first adjustment ring has a non-profiled upper end face and a profiled lower end face provided with steps. In this way, the first adjustment ring is provided with a width that varies along its perimeter, which makes it possible to increase or decrease the cross-sectional area of the inlet opening of the outlet channel according to the rotary position of the adjustment ring. The second adjustment ring is shaped in the same way. The lower end face of the second adjustment ring is non-profiled and the upper end face is profiled and provided with steps. The manner of operation of the second adjustment ring when the adjustment element is rotated corresponds to that of the first adjustment ring, with the difference that, as the first adjustment ring increasingly closes the inlet opening of the first outlet channel, the lower, second adjustment ring increasingly opens the inlet opening of the second outlet channel. The sum of the cross-sectional areas of the inlet openings of the outlet channels remains constant.

In a practical embodiment of such a valve, it is possible to set the blending ratio, which is the proportion by volume of the liquid that is led through the bypass conduit, between 0 and 70 % in intervals of 10 %. It would theoretically be possible to increase the range to 100 %. However, this would make it necessary to increase the interval size from 10 % by increasing the difference in height of the steps on the end faces of the adjustment rings. The alternative would be to increase the number of steps, but this would cause a different problem, especially if the adjustment of the blending ratio is to be automated. It is not possible to set the rotary position of the adjustment element relatively precisely without resorting to a relatively sophisticated actuating mechanism capable of accurate adjustment in relatively small steps. Furthermore, an increased number of steps would also mean that their azimuthal dimensions would need to be smaller to fit them all along the circumferences of the adjustment rings. Of necessity, the inlet and outlet channels would then also need to have narrower openings, thus increasing the resistance to flow of the blending valve.

It is an object of the invention to provide a valve, system and method of operating it and fluid treatment apparatus of the types mentioned above in the opening paragraphs that can be actuated by means of a relatively unsophisticated system to adjust in relatively small intervals over a relatively wide range that proportion of all the fluid passing through the first port that passes through only a particular one of the two second ports.

This object is achieved by the valve according to the invention, which is defined in claim 1.

The valve is suitable for operating as one of a variable-ratio flow divider and a mixing valve. In the former case, the first port is connected to a supply of fluid to function as an inlet whereas the second ports function as outlets. The proportion of the fluid received at the inlet that passes through the first of the second ports is adjustable in steps, depending on the positions of the first and second parts of the regulating device. A useful application is in a fluid treatment apparatus, where a stream of fluid leaving the second of the second ports is led through a fluid treatment part, which is bypassed by a stream of fluid leaving the first of the second ports. If the two streams are then combined, the proportion of the fluid received at the inlet that passes through the first of the second ports is referred to as the blending ratio. Where the valve operates as a mixing valve, the second ports function as inlets and the first port functions as an outlet. The proportion of fluid emanating from the first of the second ports in the mix provided at the first port is adjustable in steps, depending on the positions of the first and second parts of the regulating device. This proportion may again be referred to as the blending ratio if the fluid from the first of the second ports has bypassed a fluid treatment part through which the fluid from the second of the second ports has been led.

End points of the range of relative movement define two additional values in a set of discrete values of the blending ratio that can be set. These two additional values are provided without there being a need to increase the range of movement of the regulating device or to reduce the size of the step change in position of the first and second part that corresponds to a change in value of the blending ratio. Where the positions of the first and second parts are rotary positions, this implies that the rotary position can be changed in larger increments. There are more values of the blending ratio that can be set than there are positions of the first part of the regulating device that can be set. Where the positions of the first and second parts are positions along a locus that is not closed, the valve can be more compact.

It is noted that the valve may be implemented as a valve for a liquid treatment apparatus, i.e. the fluid may be a liquid.

The range of relative positions will generally be continuous, but the valve will generally be operated such that the first and second parts are only set to the end points of the range. The catch mechanism is comprised of one or more parts via which a chain of contact is established that allows the first part to catch the second part to entrain it. The chain of contact may be temporary or permanent. Thus, the catch mechanism need not establish a permanent connection between the first and second parts such that they cannot be separated. In an embodiment, the catch mechanism is configured such that the second part is entrained at both end points of the range of relative movement.

In an embodiment, at least the control member and the first and second parts of the regulating device are rotatably journalled, and the ranges of positions and relative positions of the first and second parts are rotary positions.

This is a configuration in which the invention is usefully implemented, because the ranges of positions of the first and second parts are inherently limited to between zero and 360 degrees. If the range is divided into N positions that can be set, the number of blending ratio values that can be set using the valve is still at least N+1, due to the fact that the second part is journalled for relative movement with respect to the first part along a range of relative positions. There is no need to increase the number of positions of the first and second parts with respect to the valve body that can be set, which would mean decreasing the size of the change in position of the first and second parts. This is also useful in that the port size need not be decreased to adapt the valve to smaller changes in position, nor need the overall valve dimensions of the valve be increased to retain the port sizes.

In a variant of this embodiment, the control member includes a rotatably journalled spindle.

The spindle can be coupled to an actuator. It may project from a valve chamber housing the first part. It may have a smaller diameter than the first part, making it relatively easy to seal the chamber. Adjusting the position of the first part in either of opposite directions using a spindle is easier to accomplish in a leak-proof manner than adjusting a rotary position of the first part using a gear or pulley acting directly on the first part, for example. In variant requiring relatively few parts, the spindle is rotatably journalled with respect to the valve body by at least one of the first and second parts.

In a variant, one of a key and socket is provided at an axial end of the spindle, e.g. an axial end separated from fluid-carrying parts of the valve by a sealing arrangement.

The key-and-socket connection allows to transfer rotary movement from an actuator to the spindle. The sealing arrangement isolates the actuator from the fluid, which is of particular use where the actuator is arranged to convert electrical energy into motion. Using a separate spindle allows the actuator to have a longer lifetime than the regulating device and also makes assembly easier. The key-and-socket connection may alternatively be used to connect the spindle to a user control operable by hand or by means of a hand-held tool.

In an embodiment of the valve, the first and second ports open into a chamber, and the first and second parts are arranged in the chamber.

Having the first and second parts in the same chamber simplifies the construction of the valve, in particular the valve body. An incoming flow of fluid is split into sub-flows in the chamber. The ratio of the volumetric rates of flow of the sub-flows is determined by the positions of the first and second parts. The catch mechanism between the first and second parts that allows relative movement of the first part relative to the second part can be provided by devices also located within the same chamber. It is only necessary to seal this chamber.

In a variant, wherein at least the control member and the first and second parts of the regulating device are rotatably journalled, and wherein the ranges of positions and relative positions of the first and second parts are rotary positions, the first and second ports are provided in side wall sections presenting circle-cylindrical inner surface sections delimiting the chamber, and the first and second parts have radially outer walls conforming to respective ones of the circle-cylindrical side wall inner surface sections.

Separate bearings enabling the first and second parts to rotate within the chamber are therefore not required. Moreover, the radially outer walls can cover or partially cover the ports in a relatively fluid-tight or at least liquid-tight manner, in that the conforming surfaces have relatively large areas of contact with the radially inwards-facing side wall surface sections.

In a variant of this embodiment, the radially outer wall of at least one of the first and second parts is stepped at an axial end.

Compared to using apertures in the first and/or the second part, the first and second parts need not be hollow. They can be arranged such that each step occludes the associated port to a different (axial) extent. The fluid passing through the non-occluded part flows past the occluding first or second part into the chamber. If the occlusion were to be by means of apertures of different size, the flow of liquid would be radially through the first or second part. Moreover, to define the differently-sized apertures, intermediate wall sections would have to be provided. For a given aperture size of the port to be occluded, fewer different degrees of occlusion could be provided, because some of the circumference would be devoted to these intermediate wall sections. With the stepped radially outer wall, by contrast, the steps corresponding to different extents of occlusion follow each other directly along the circumference of the first and/or second part.

In a variant, the radially outer walls of the first and second parts are stepped at facing respective axial ends, wherein the facing respective axial ends are spaced apart from each other in axial direction.

In this embodiment, the first port can be provided at an axial position in between the facing respective axial ends of the first and second parts. The first and second parts can be situated in one single chamber having the first and both second ports.

In a further variant, at least one of the radially outer walls is stepped with at least two different step sizes, e.g. with step sizes increasing as the steps approach the axial end.

In this embodiment, the second ports may have different dimensions. The change in blending fraction value can still be the same for each change in position.

In an embodiment, wherein the first and second ports are provided in side wall sections presenting circle-cylindrical inner surface sections delimiting the chamber, and wherein the first and second parts have radially outer walls conforming to respective ones of the circle-cylindrical side wall inner surface sections, the chamber is closed at one axial end by at least a closure device, separate from the valve body and having a diameter at least as large as a largest of the diameters of the radially outer walls of the first and second parts.

This embodiment is relatively easy to assemble. The regulating device is inserted into the valve chamber, which is open at one axial end. That axial end is then closed by means of the closure device.

In a variant, the control member extends through the closure device.

Thus, the control member is accessible to allow the first and second parts of the regulating device to be adjusted in position. It is possible to provide a mechanical coupling between the control member and an actuator or user-operable control device.

In an embodiment of the valve, the control member is linked in position to the first part.

The catch mechanism provides a fixed link, meaning that a change in position of the control member results in a commensurate change in position of the first part and vice versa. The control member can thus be used to move the first part in both directions along the range of positions. Furthermore, linkages are dispensed with, simplifying the regulating device.

It is noted that the catch mechanism between the first and second parts is provided by the control member.

Thus, instead of having the control member move the first part and the first part entraining the second part, the second part is entrained directly by the control member. This is useful in fluid treatment apparatus in which the valve is operated by an actuator coupled to the control member. If only the change in position relative to a reference position of the actuator is known (i.e. there is no closed-loop control of the position of the control member or the first part), there is less uncertainty as to the position of the second part. This is because tolerance chains for the catch mechanism are shorter if the control member interacts directly with the second part.

In a variant of this embodiment, wherein the control member includes a rotatably journalled spindle, the spindle is provided with at least one spline, arranged within a respective groove in the second part, and the at least one groove allows a range of rotary movement of the spindle relative to the second part.

In this embodiment, the second part can also play a role in centring the spindle, which has an axial section passing into or through the second part, namely the section provided with the spline(s). The part of the control member and the part of the second part fulfilling the entrainment function are situated radially at a distance from the radially outer wall of the second part. The latter fulfils the function of selectively occluding a path between the first port and the second one of the second ports. The radial separation helps minimise interference between the parts fulfilling the functions. In particular, the parts for fulfilling the entrainment function interfere only minimal with the fluid flow.

In an alternative embodiment, the catch mechanism is provided by at least one catch, protruding from one of the first and second parts in a direction perpendicular to a plane of movement of the part concerned and arranged to engage part of the other of the first and second part at the end point of the range of relative movement.

Such an embodiment could be implemented with only the first and second parts in a valve chamber, i.e. without a further part such as a spindle.

An embodiment of the valve is provided with at least one signalling device, supported for movement with the control member.

The position of the signalling device, especially if there is only one, may correspond to a particular position within the range of positions of one of the first and second parts, the other positions being inferred in a form of dead reckoning. The signalling device may in fact be attached to the first part if the first part is linked in position to the control member.

An embodiment of the valve is provided with at least one detent for arresting movement of at least the second part relative to the valve body.

This ensures that the first part and/or the control element can be used to position the second part relative to the valve body and then be positioned independently, with the second part remaining at the position set by the first part and/or the control element. The detent may comprise a series of depressions in a surface of the second part in combination with a resilient member or a resiliently biased member arranged to engage a depression aligned with the member.

According to another aspect, the method of operating a valve according to the invention includes causing a position of the second part of the regulating device to be adjusted by causing the control member to be moved.

Although the second part is journalled for relative movement with respect to the first part along a range of relative positions, it is not necessary to provide a separate control member or actuator to position the second part.

In an embodiment, the valve is adjusted to a certain configuration by carrying out a first step of causing the position of the second part to be adjusted by causing the control member to be moved such that the first part is moved in one direction along the range of positions of the first part followed by a second step of causing the position of only the first part to be adjusted by causing the control member to be moved such that the first part is moved in the opposite direction.

Thus, the valve is set from a first setting to a second setting by changing the position of only the second part. The first and second settings correspond to different ratios of the volumetric rates of the flows through the first and second ports.

In a variant of this embodiment, wherein the regulating device is rotatably journalled and the ranges of positions and relative positions are rotary positions, the control member is rotated over at least 360° in the first step.

It is thus not necessary to make use of a sensor arrangement for tracking the position of the second part of the regulating device with respect to the valve body independently of that of the first part or the control element. The position of the second part relative to the first part is at the end of the range of relative movement after the rotation over at least 360°.

An embodiment of the method includes determining a position of at least one of the control member and the first part, wherein determining the position includes receiving a signal from at least one sensor arranged to detect at least one signalling device supported for movement with the control member.

The signalling device may be at a location removed from the sensor. There may be only one signalling device, so that the sensor is suitable for signalling whenever the first part and/or the control member is in a particular position, e.g. rotary position, with respect to the valve body. From there, other positions can be determined by dead reckoning, for example. In another embodiment, there may be multiple signalling devices, e.g. in the form of sectors on a disc of a rotary encoder.

According to another aspect, the system for operating a valve according to the invention includes:
a valve according to the invention;
an actuator for moving the control member; and
a device for controlling the actuator,
wherein the controlling device is configured to cause a position of the second part to be adjusted by controlling the actuator to move the control member.

The system is thus configured to carry out an automated implementation of the method according to the invention.

In an embodiment, the controlling device is configured to adjust the valve to a certain configuration by carrying out a first step of causing the position of the second part to be adjusted by causing the control member to be moved such that the first part is moved in one direction along the range of positions of the first part, followed by a second step of causing the position of only the first part to be adjusted by causing the control member to be moved such that the first part is moved in the opposite direction.

In a variant of this embodiment, wherein the regulating device is rotatably journalled and the ranges of positions and relative positions are rotary positions, the controlling device is configured to control the actuator to rotate the control member over at least 360° in the first step.

An embodiment of the system includes at least one sensor for detecting a position of at least one signalling device supported for movement with the control member, wherein the controlling device is configured to use at least one signal from the at least one sensor to determine a position of at least one of the control member and the first part of the regulating device.

In an embodiment of the system, the actuator is one of a linear and rotary electric motor, e.g. a stepper motor.

The valve according to the invention can be set to achieve relatively many different discrete values of the blending fraction. Nevertheless, the size of the change in position of the first and second parts necessary to change from one of the discrete values to the next can be kept relatively large. This means also that a stepper motor with relatively large steps can be used or that a gear mechanism for translating large steps of a stepper motor into small changes in position of the control member can be dispensed with.

According to another aspect, the fluid treatment apparatus according to the
invention includes:
an inlet for receiving a fluid to be treated;
a fluid treatment device including at least one treatment part;
an outlet for providing a mix of fluid led through a certain one of the at least one treatment parts and of fluid led past the certain treatment part; and
a valve according to the invention for adjusting a proportion of fluid led past the certain treatment part in the mix.

The certain treatment part can be of the type that treats fluid passing through it to a fixed or at least quasi-constant degree. Examples include treatment parts including treatment media for the treatment of fluid by sorption and treatment parts including ultraviolet lamps arranged to emit light at a constant intensity. The degree of treatment of the fluid provided at the outlet can nevertheless be varied by adjusting the valve. Moreover, as the performance of the certain treatment part changes, e.g. deteriorates, over time, the valve can be adjusted to achieve the same degree of treatment.

An embodiment of the fluid treatment apparatus includes a replaceable fluid treatment cartridge, wherein the certain treatment part is included in the fluid treatment cartridge.

The certain treatment part can thus be of the type having a performance deteriorating over time. The valve may be adjusted to achieve a constant quality of fluid at the outlet. When this is no longer possible, the cartridge may be replaced.

A variant of this embodiment includes a head device including a socket for receiving an end part of the fluid treatment cartridge, wherein the end part is provided with at least one first port and at least two second ports for sealed connection with respective first and second ports in the socket, wherein the first and second ports in the socket are each in fluid communication with a respective one of the first and second ports in the valve body, wherein the first port of the cartridge end part is in fluid communication with the second ports of the cartridge end part, and wherein only one of two of the second ports of the cartridge end part is in fluid communication with the first port of the cartridge end part via the certain treatment part.

The other of the two second ports of the cartridge end part is in fluid communication with the first port of the cartridge end part such that flow paths between the two bypass the certain treatment part. In this embodiment, the valve need not be part of the fluid treatment cartridge, which can therefore be cheaper and simpler to manufacture.

In an embodiment, the certain treatment part includes an ion exchange material, in particular an ion exchange material for reducing the carbonate hardness of water.

The carbonate hardness (also referred to as temporary hardness) of water is that component of the total hardness that is due to magnesium and calcium carbonate. The ion exchange material may be an ion exchange material of which a majority by volume is loaded with hydrogen ions as the counterions, e.g. a weakly acidic cation exchange resin. In such an embodiment, the treatment results in reduced alkalinity. The valve can be employed to achieve a particular acidity level of the water at the outlet. This may be an acidity level appropriate to the subsequent use of the water, e.g. to prepare a beverage such as coffee or tea. It may be an acidity level appropriate to ensure that limescale build-up and corrosion are both prevented to a desired degree.

An embodiment of the fluid treatment apparatus further includes a system for operating the valve according to the invention.

This is an automated embodiment, suitable for setting a degree of treatment with little or no user intervention.

The invention will be explained in further detail with reference to the accompanying drawings, in which:
- Fig. 1: is a perspective view of a head device of a liquid treatment apparatus;
- Fig. 2: is a perspective view from a first angle of an end section of a liquid treatment cartridge of the liquid treatment apparatus;
- Fig. 3: is a perspective view from a second angle of the end section of the liquid treatment cartridge;
- Fig. 4: is a cross-sectional view of the liquid treatment cartridge;
- Fig. 5: is a perspective view from below of the head device of Fig. 1;
- Fig. 6: is a detailed perspective view into a socket of the head device from a first angle;
- Fig. 7: is a detailed perspective view into the socket from a second angle;
- Fig. 8: is a perspective view of the head device with part of its housing removed;
- Fig. 9: is a perspective cross-sectional view of a chamber in a valve body in the head device;
- Fig. 10: is a plan cross-sectional view of the valve;
- Fig. 11: is a perspective cross-sectional view of the valve with only certain parts of its regulating device shown;
- Fig. 12: is a perspective view of the valve;
- Fig. 13: is a perspective view showing a signalling device coupled to a spindle of the valve;
- Fig. 14: is a perspective view into the head device showing a sensor for detecting the signalling device;
- Fig. 15: is a perspective view showing a connection between the valve and an actuator;
- Fig. 16: is a perspective view of a regulating device of the valve;
- Fig. 17: is a perspective view of a spindle comprised in the regulating device;
- Fig. 18: is a perspective view from below of a first part of the regulating device for occluding a fluid path through the valve;
- Fig. 19: is a side view of the first part shown in Fig. 18;
- Fig. 20: is a perspective view of a second part of the regulating device for occluding a fluid path through the valve;
- Fig. 21: is a perspective view from below of the first part shown in Figs. 18 and 19 assembled with the spindle shown in Fig. 17; and
- Fig. 22: is a simplified perspective view of an alternative regulating device for a valve of the type illustrated in Figs. 1-21.

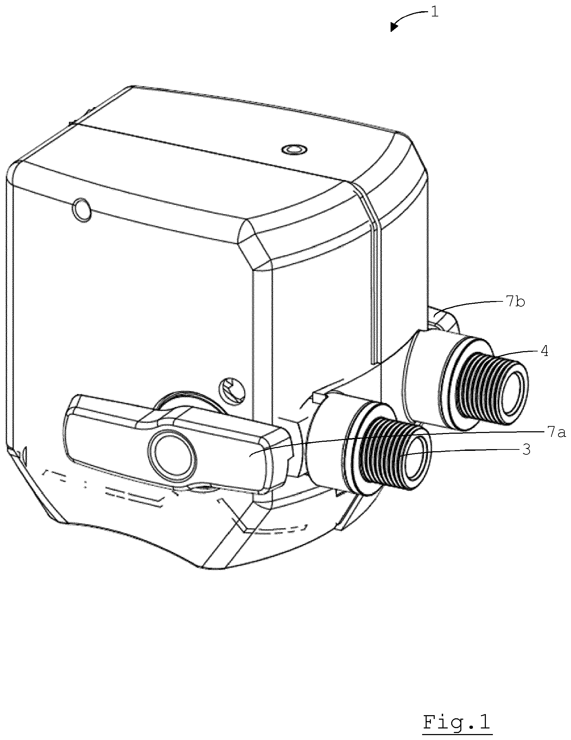

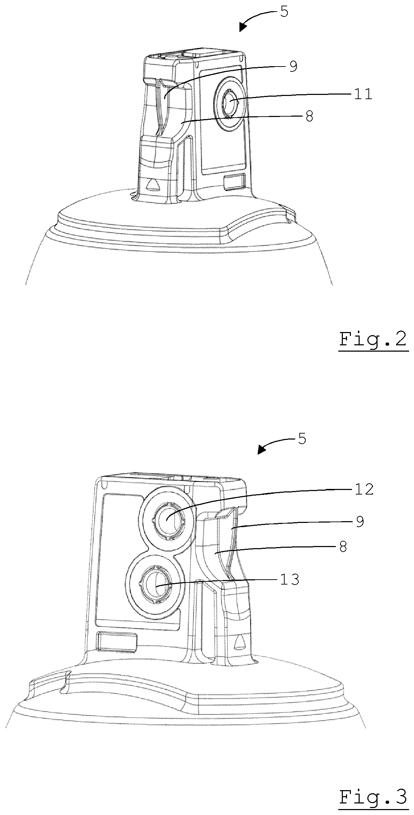

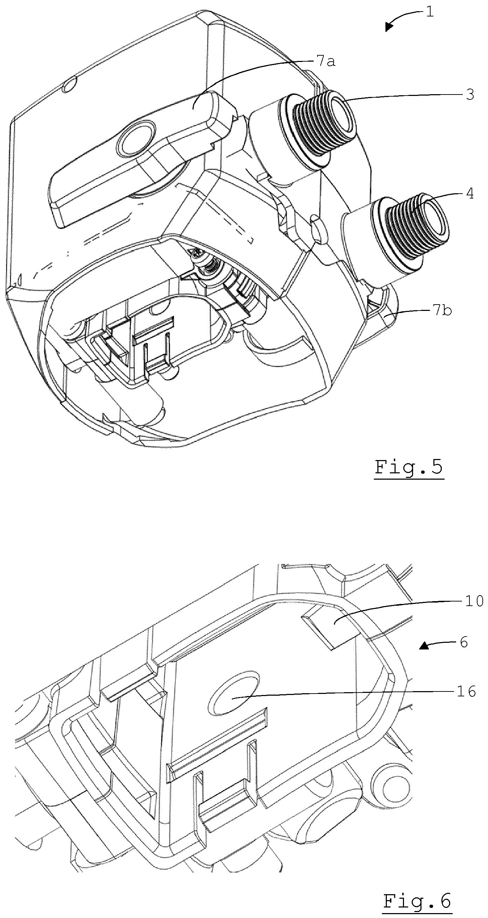

A liquid treatment apparatus described below by way of example is configured to treat aqueous liquids such as mains drinking water. It includes a head device 1 (Figs. 1 and 5) and a replaceable liquid treatment cartridge 2 (Figs. 2-4) for releasable connection to the head device 1.

The head device 1 is configured to enable it to remain permanently connected to the water pipe system in a building, whereas a quick-release mechanism allows for easy replacement of the liquid treatment cartridge 2. A head device inlet connector 3 (Fig. 1) allows it to be connected to a coupler on a pipe (not shown) for supplying liquid to be treated. A head device outlet connector 4 allows the head device 1 to be connected to a coupler on a pipe (not shown) for supplying treated liquid to an appliance (not shown) such as a beverage machine, steam cooker, dish washer or washing machine.

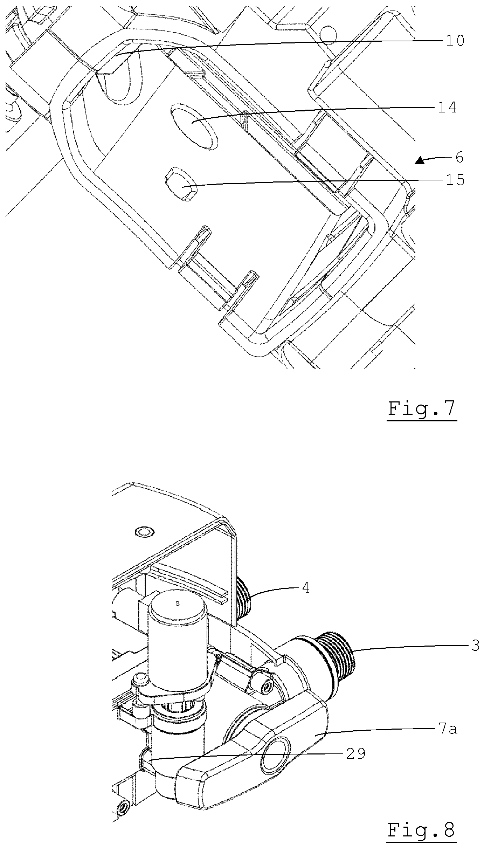

The liquid treatment cartridge 2 includes a cartridge head 5 (Figs. 2,3) for insertion into a socket 6 (Figs. 5-7) of the head device 1. Levers 7a,b (Figs. 1,8) allow a user to operate the quick-release locking mechanism. This mechanism is generally of the type described more fully in WO 2008/122496 A1, herein incorporated by reference. The cartridge head 5 includes a recess 8 divided in two by a ridge 9. The levers 7a,b move an appropriately shaped locking segment 10 (Figs. 6 and 7) into and out of a position of engagement in the recess 8 when turned.

The cartridge head 5 is provided with one cartridge outlet port 11 (Fig. 2). The cartridge head 5 is also provided with two cartridge inlet ports 12,13, in this example an upper cartridge inlet port 12 and a lower cartridge inlet port 13 (Fig. 3). Complementary outlet ports 14,15 are provided in the socket 6. They are in sealed fluid communication with the cartridge inlet ports 12,13 when the liquid treatment cartridge 2 is locked to the head device 1. Similarly, an inlet port 16 is in sealed fluid communication with the cartridge outlet port 11 when the liquid treatment cartridge 2 is locked to the head device 1.

The outlet ports 14,15 of the socket 6 for receiving the cartridge head 5 are in fluid connection with the inlet provided by the head device inlet connector 3 via a valve arranged to function as a variable-ratio flow divider. This valve splits an incoming flow of liquid to be treated into a main flow and a bypass flow. The main flow is passed to the liquid treatment cartridge 2 via the upper outlet port 14 in the socket, which communicates with the upper inlet port 12 of the liquid treatment cartridge 2. The bypass flow is passed to the liquid treatment cartridge 2 via the lower outlet port 15 in the socket, which communicates with the lower inlet port 13 of the liquid treatment cartridge 2.

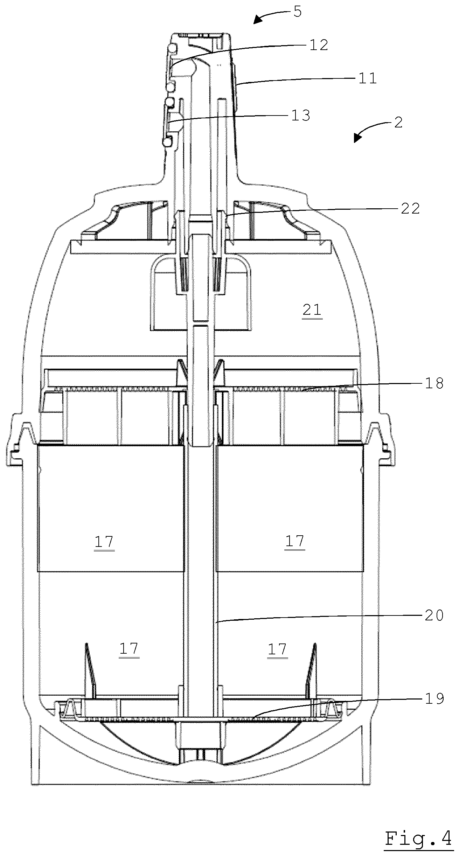

The liquid treatment cartridge 2 is provided with a main liquid treatment part in the form of a main bed 17 of liquid treatment material (Fig. 4) held between liquid-permeable retaining devices 18,19. This liquid treatment material may be granular or fibrous or a mixture of both. It includes ion exchange material. In one application, the ion exchange material includes cation exchange material that is at least partly in the hydrogen form, e.g. weakly acidic cation exchange resin. In this application, water led through the main bed 17 has its carbonate hardness reduced, generally to zero. Some of the cation exchange material may be loaded with alkali metal ions such as potassium or sodium. The ion exchange material may be mixed with other materials for the treatment of liquid by sorption, e.g. activated carbon or a scavenging material for removing e.g. heavy metals. In another application, the liquid treatment material may include a mixture of cation exchange and anion exchange material. Such a mixture is suitable for demineralising water led through the main bed 17. In yet another application, the liquid treatment material may include a cation exchange material, e.g. a strongly acidic cation exchange resin, in the sodium form for reducing the total hardness of water led through the main bed 17, e.g. to zero.

The main flow of liquid is led from the lower inlet port 13 to the main bed 17 via a fall tube 20.

A secondary bed 21 of liquid treatment material is arranged downstream of an upper one of the retaining devices 18,19. The liquid treatment material in the secondary bed 21 differs in composition from that of the main bed 17. Some devices may not be present or present in a different proportion. In an alternative embodiment, the secondary bed 21 only differs in terms of its depth, so that treatment in only the secondary bed 21 is incomplete. Generally, the treatment material of the secondary bed 21 will also comprise a material for the treatment of liquid by sorption, but a material other than a cation exchange material. The material other than a cation exchange material may be provided in addition to or as an alternative to cation exchange material. It may for example comprise at least one of activated carbon and a scavenging material for removing heavy metals.

The main flow of liquid passes from the main bed 17 of liquid treatment material into the secondary bed 21 of liquid treatment material through the upper retaining device 18. The secondary flow of liquid passes from the lower cartridge inlet port 13 directly to the secondary bed 21 of liquid treatment material through a conduit 22. The conduit 22 is coaxial with the fall tube 20, but shorter. It will thus be appreciated that the main flow of liquid and the secondary flow of liquid are united in the secondary bed 21 of liquid treatment material, where they mix. The mix passes from the liquid treatment cartridge 2 to the head device 1 via the cartridge outlet port 11 and the inlet port 16 in the socket 6 of the head device 1.

The proportion by volume of the mix of liquid supplied by the liquid treatment cartridge 2 that has bypassed the main bed 17 of liquid treatment material is referred to as the blending fraction *x*. It is determined by the settings of the valve in the head device 1 referred to previously.

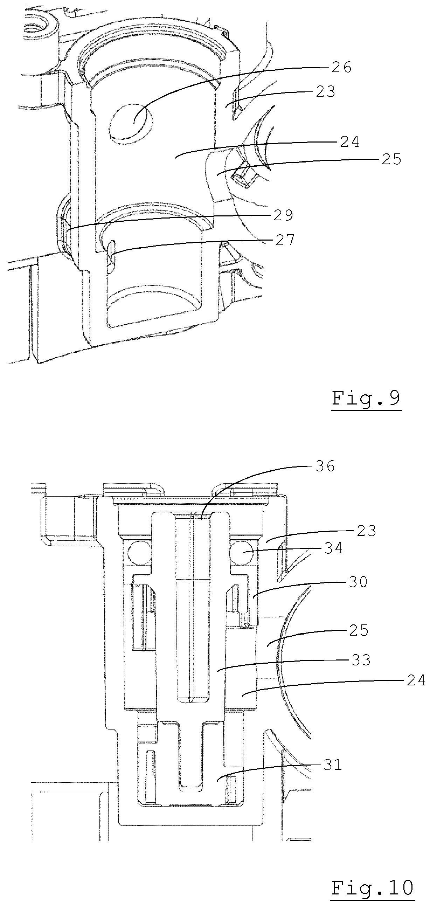

The valve comprises a valve body 23 defining a valve chamber 24 with successive co-axial, essentially circle-cylindrical sections. The valve chamber 24 as defined by the valve body is open at one axial end and closed at the opposite axial end (Fig. 9). A valve inlet port 25 is provided in a side wall section presenting an essentially circle-cylindrical inward-facing surface delimiting the chamber 24. The valve inlet port 25 is in fluid communication with the inlet of the head device 1 defined by the inlet connector 3. It thus admits liquid to be treated into the valve chamber 24, in use.

Two outlet ports 26,27 are provided in respective side wall sections that each present circle-cylindrical inward-facing surfaces. The outlet ports 26,27 are at different respective axial positions. The valve inlet port 25 is at an intermediate axial position. Thus, some of the incoming liquid flows in one axial direction to a first of the valve outlet ports 26,27 and some of the incoming liquid flows in the opposite axial direction to a second of the valve outlet ports 26,27, unless one of the two valve outlet ports 26,27 is completely occluded.

In the illustrated example, the outlet ports 26,27 are at different respective angular positions with respect to the cylindrical co-ordinate system defined by the circle-cylindrical sections of the valve chamber 24. In an alternative embodiment, they may be at the same angular position. This angular position will generally differ from that of the valve inlet port 25 to make the head device 1 relatively compact and the resistance to flow of the valve relatively low.

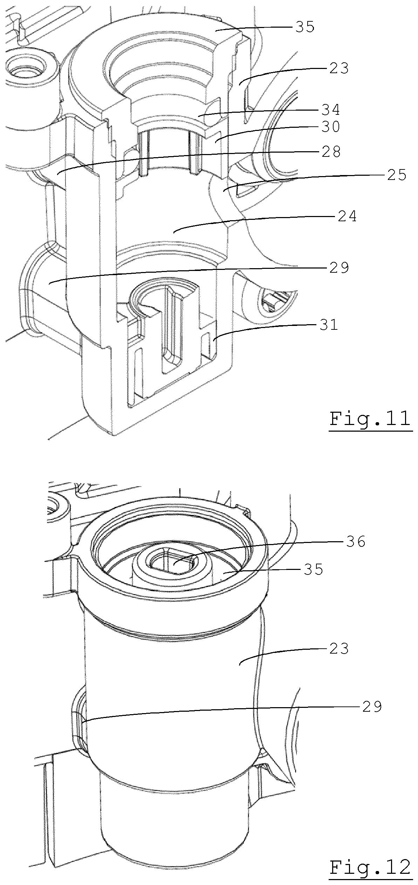

An upper valve outlet port 26 is in fluid communication with the upper outlet port 14 in the socket 6 of the head device 1 via an upper short conduit 28 (Fig. 11). A lower valve outlet port 27 is in fluid communication with the lower outlet port 15 in the socket 6 of the head device 1 via another, lower short conduit 29. It will thus be apparent that the lower short conduit 29 carries the bypass flow, whereas the upper short conduit 28 carries the main flow of liquid.

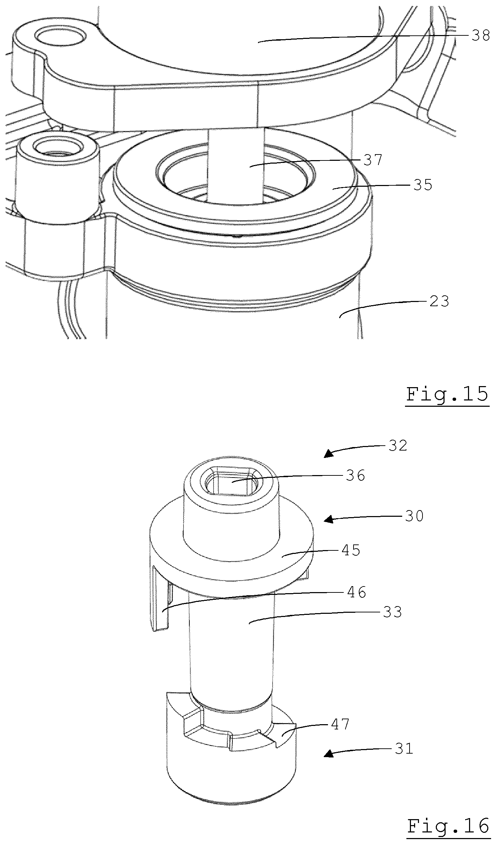

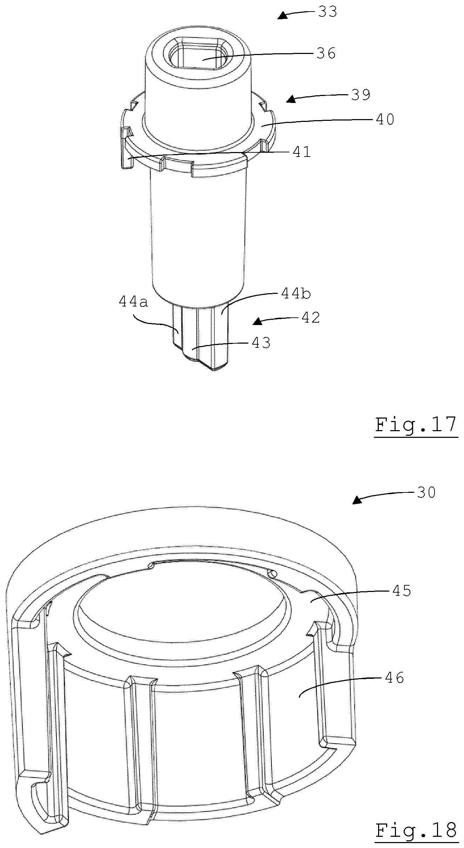

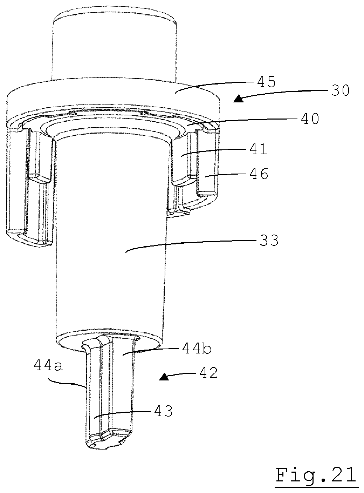

It is noted that the cross-sectional area of the valve outlet port 27 for the bypass flow has a smaller cross-sectional area than the valve outlet port 26 for the main flow of liquid. However, their axial dimensions differ by less than their azimuthal dimensions. This is because they are occluded by selectively covering them to varying extents in the axial direction but completely in azimuthal direction, by setting rotary positions of appropriately shaped first and second occlusion parts 30,31 (Figs. 18-21) of a regulating device 32 (Fig. 16). In an alternative embodiment, however, the valve outlet ports 26,27 have the same cross-sectional area.

The regulating device 32 in this example comprises the first and second occlusion parts 30,31 and a control member in the shape of a spindle 33 (cf. Figs. 16-21). As illustrated, these are distinct components. In an alternative embodiment, the spindle 33 and the first occlusion part 30 are integral parts of a single component, e.g. a component obtainable by injection-moulding.

The regulating device 32 is insertable into the valve chamber 24 at the open axial end. To seal off the valve chamber 24, a sealing ring 34 is provided on the spindle 33 on an opposite side of the first occlusion part 30 to the second occlusion part 31 in axial direction (Figs. 10,11). The sealing ring 34 is also pressed against a surface of the regulating device facing in axial direction out of the valve chamber 24. To this end, a closure device 35 is provided. The closure device has a diameter at least as large as the largest of the diameters of the first and second occlusion parts 30,31. As can be seen (Fig. 10), an axial end section of the spindle 33 extends through the closure device 35. In one embodiment, a reversible connection such as a threaded connection is provided between the closure device 35 and the valve body 23 that defines the valve chamber 24. In another embodiment, the closure device 35 is fixed irreversibly by pressing.

The spindle 33 is provided with a socket 36 (Figs. 12,16,17) at an axial end separated from the fluid-carrying parts of the valve by the first occlusion part 30, the sealing ring 34 and the closure device 35. This socket 36 is configured to receive a keyed part for transferring rotary movement. In the illustrated embodiment, the spindle socket 36 enables the spindle 33 to be connected to a spindle 37 of a rotary actuator in the shape of an electric motor 38 (Figs. 8,15). The electric motor 38 may be a servo motor or a stepper motor, for example. In an alternative embodiment, the key-and-socket connecting mechanism connecting the valve spindle 33 to the motor spindle 37 is implemented such that the valve spindle 33 is provided with the keyed part. Other connecting mechanisms coupling the spindles 33,37 such as to synchronise their rotary motion are conceivable.

The spindle 33 is provided with an integral annular skirt 39 comprising an essentially planar, radially extending section 40 and at least one axially extending reinforcement section 41 (Fig. 17). The reinforcement section extends axially from a radially outer edged of the planar radially extending section 40. In the illustrated example, it is a single stepped section, each step having a different axial dimension. The planar radially extending section 40 is provided with a castellated radially outer edge.

The spindle 33 is provided with an axial section 42 shaped with a central axially extending section 43 on which multiple, in this example two, splines 44a,b are provided. They are located at 180° intervals. The diameter of the central axially extending section 43 is substantially smaller than that of other axial sections of the spindle 33. Even including the splines, the maximum diameter of the axial section 42 is still slightly smaller than that of the other axial sections of the spindle 33. This provides space for any contamination (e.g. debris due to wear) to collect, so that it is less likely to interfere with the splines 44a,b where they contact the second occlusion part 31. In the illustrated embodiment, the axial section 42 is a section extending to an axial end of the spindle 33. This enables this section to be inserted into the second occlusion part 31.

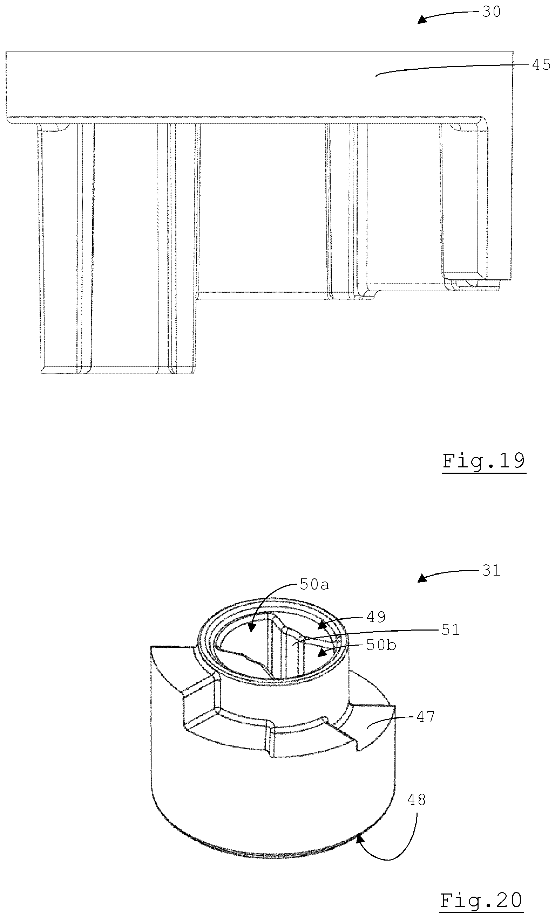

The essentially planar, radially extending section 40 of the spindle skirt 39 supports the first occlusion part 30 in axial direction. The first occlusion part 30 (Fig. 18,19) is a single monolithic part, shaped with a planar annular section 45 and a depending wall section 46, extending axially and adjoining the planar annular section 45 at the latter's radially outer edge. The axially depending wall section 46 extends along only a section of the circumference of the first occlusion part 30. The radially outwardly facing surface of the axially depending wall section 46 conforms to the radially inwardly facing surface of a section of the wall of the valve chamber 24 in which the first occlusion part 30 is located, in use. Thus, the first occlusion part 30 can serve as a bearing for the spindle 33. The axially depending wall section is stepped, with each step extending over a different distance in axial direction from the planar annular section 45. The step sizes (i.e. the difference in axial dimension with respect to the adjacent smaller step) are also different. The azimuthal dimensions of each step are equal to or larger than the diameter of the valve outlet port 26 to be occluded by the first occlusion part 30 when positioned in the valve chamber 24. The radially outer edge of the planar annular section 45 is castellated such as to form the inverse of the castellated radially outer edge of the supporting planar, radially extending section 40 of the spindle skirt 39. Thus, the spindle skirt 39 both supports and meshes with the first occlusion part 30 such that their rotary positions are fixedly linked to each other. The first occlusion part 30 rotates with the spindle 33 in both directions of (intrinsic) rotation. They are thus linked in position, in that it is not possible to change the position of one of them without changing the position of the other commensurately. The reinforcement section 41 supports the steps of the axially depending wall section 46 in radial direction, which can therefore be thinner.

The second occlusion part 31 (Fig. 20) is a single monolithic part. It is shaped to have a central hub section surrounded by a radially outer section forming a stepped radially outer wall 47. The radially outwardly facing surface of the stepped radially outer wall 47 conforms to the radially inwardly facing surface of a section of the wall of the valve chamber 24 in which the second occlusion part 31 is located, in use. Each step of the stepped radially outer wall 47 extends over a different distance in axial direction from an edge 48 at an axial end of the second occlusion part 31.

The hub section of the second occlusion part 31 is provided with a hub socket 49 (which may be open at both axial ends) for receiving the axial section 42 of the spindle 33 provided with the splines 44a,b. The splines 44a,b are received in grooves 50a,b that afford them a certain amount of play. Thus, relative rotation of the spindle 33 with respect to the second occlusion part 31 and therefore of the first occlusion part 30 relative to the second occlusion part 31 is possible. Seen in axial direction in cross-section, the hub socket 49 has inwardly facing central wall sections 51 that conform to the radially outwardly facing wall sections of the central axially extending section 43 of the axial section 42 of the spindle 33 and are shaped as circle segments. Because the radially outer surface of the stepped radially outer wall 47 conforms to the radially inwardly facing surface of a section of the wall of the valve chamber 24 in which the second occlusion part 31 is located, in use, the second occlusion part 31 thus serves as a bearing for the spindle 33. A distance between opposing abutments surfaces in each of the grooves 50a,b increases in radially outwards direction. Associated abutment surfaces on the splines 44a,b are essentially plan-parallel, thus allowing for the relative rotation between the spindle 33 and the second occlusion part 31.

In use, the spindle 33 is rotated over an angle sufficient to entrain the second occlusion part 31, so that the positions of the first and second occlusion parts 30,31 are both adjusted. The degrees of occlusion of the valve outlet ports 26,27 thus also change. It is not necessary to determine the rotary position of the spindle 33 very precisely; it is sufficient to determine which one of the steps of the first and second occlusion parts 30,31 is placed in front of the associated valve outlet port 26,27. Where the electric motor 38 is a stepper motor, the steps need not be very small, since the number of steps on the axially depending wall section 46 and the stepped radially outer wall 47 can also be kept relatively low. The number of values of the blending ratio x that can be set is not limited to the number of steps, because the spindle 33 can subsequently be rotated in the opposite direction over an angle corresponding to a step. The spacing between the abutment surfaces of the spline-receiving grooves 50a,b is such that only the first occlusion part 30 rotates with the spindle 33, whereas both rotate relative to the second occlusion part 31, which remains in place.

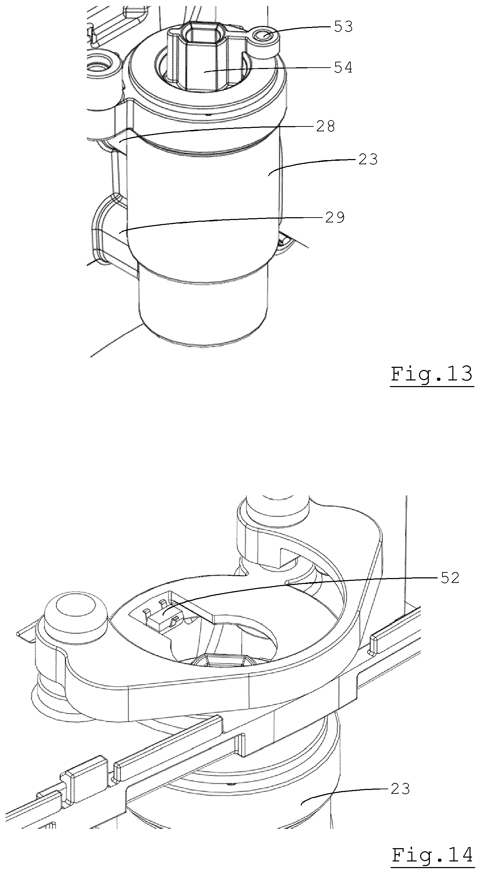

The electric motor 38 is controlled by a controller (not shown) arranged to receive a signal from a sensor 52 (Fig. 14) for detecting a signalling device 53 (Fig. 13). The signalling device 53 is supported for movement with the spindle 33 by a rotatably mounted bracket 54. The signalling device 53 illustrated by way of example is a permanent magnet. The sensor 52 may be a Hall effect sensor, for example. In an alternative embodiment, an optical sensor and signalling device are used. The signalling device may be merely a reflective, absorptive or transparent section of a body arranged to rotate with the spindle 33 in such an embodiment. It is also possible to use an electrically insulating or conductive section of a body arranged to rotate with the spindle 33 as the signalling device for co-operating with a sensor comprising one or more brushes held against the object.

In the illustrated embodiment and in combination with a stepper motor, it suffices to have one signalling device to provide a reference position. From there, the number of steps of the stepper motor can be counted to determine the rotary position of the first occlusion part 30.

In an embodiment, the controller receiving the signal from the sensor 52 and controlling the electric motor 38 causes the spindle 33 to be rotated over 360° in a first step of each adjustment operation. This ensures that the signalling device 53 is sensed once and that the second occlusion part 31 is at the end of its range of relative movement with respect to the spindle 33 and the first occlusion part 30. Thereupon the second occlusion part 31 is positioned. Depending on the value of the blending fraction *x* required, the first occlusion part 30 may then be rotated in the opposite direction.

Thus, the number of values of the blending fraction *x* that can be set is higher than the number of steps on the axially depending wall section 46 of the first occlusion part and on the stepped radially outer wall 47 of the second occlusion part. The azimuthal dimensions of these steps can remain relatively large and the electric motor 38 can be a stepper motor rotating over a relatively large angle with each step executed by it. It is sufficient to detect a reference position by means of the sensor 52 and signalling device 53. The signalling device 53 can be relatively large. The same is true for the distance between the signalling device 53 and the sensor 52

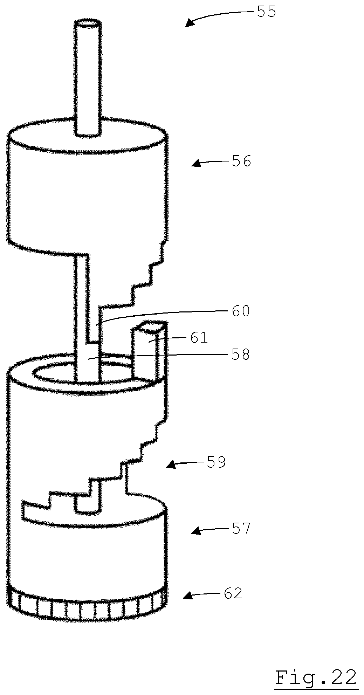

Fig. 22 illustrates how the basic design of the valve may be varied in several respects. An alternative regulating device 55 comprises a first occlusion part 56, a second occlusion part 57 and a spindle 58. The spindle 58 and the first part 56 are linked in position, e.g. because they form integral parts of a single body or are rigidly fixed to each other.

The spindle 58 is inserted into a passage or recess of the second occlusion part 57 such as to be free to rotate relative to the second occlusion part 57. The second occlusion part 57 thus provides a bearing for the spindle 58 at one axial end of the spindle 58. One of a key and socket (not shown) may be provided at the opposite axial end, as is the case for the spindle 33 of the other regulating device 32. In an alternative embodiment, the spindle 58 does not extend axially beyond the first occlusion part 56. The second occlusion part 57 is thus separated from the first occlusion part 56, except that a catch mechanism is provided. This catch mechanism is constituted in such a way that the first occlusion part 56 contacts the second occlusion part 57 at end points of a range of range of relative positions, as will be explained.

In use, both the first and the second occlusion part 56,57 are rotatably journalled in a chamber such as the one of the valve of Figs. 1-21. As mentioned, that chamber is delimited by side wall sections presenting circle-cylindrical radially inwards-facing surface sections. The first and second occlusion parts 56,57 have radially outer walls conforming to respective ones of the circle-cylindrical side wall surface sections. The radially outer wall of the first occlusion part 56 is stepped at an axial end facing the second occlusion part 57. By contrast, the second occlusion part 57 is provided with a window 59 having a stepped edge. The second occlusion part 57 is hollow over part of its length, so that liquid can flow through the window into a space between the spindle 58 and the radially outer side wall of the second occlusion part 57. From there, it can flow into the space between the first and second occlusion parts 56,57.

The second occlusion part 57 is journalled for rotation with respect to the first occlusion part 56 along a range of relative positions, as mentioned. The catch mechanism between the two enables the first occlusion part 56 to entrain the second occlusion part 57 at either end point of the range of relative positions. In the embodiment of Fig. 22, the catch mechanism is provided by catches 60,61 protruding from the first and second occlusion parts 56,57, respectively in a direction perpendicular to a plane in which they rotate. The catches 60,61 are arranged to engage each other at the end points of the range of relative positions.

The range of relative positions is relatively large. In use, the first occlusion part 56 is rotated over 360° to ensure that one of the end points of the range of relative positions is reached. The second occlusion part 57 is then positioned by causing the first occlusion part 56 to rotate. Thereafter, the first occlusion part 56 is rotated in the opposite direction to position only the first occlusion part 56. The second occlusion part 57 remains at the rotary position it was originally set at. To this end, the second occlusion part 57 is provided with a series of notches 62, engageable by a resilient element or a resiliently biased element (not shown). Thus, a detent mechanism for arresting rotation of the second occlusion part 57 is provided.

The valve and fluid treatment apparatus in which the alternative regulating device 55 are used can in all other respects be the same as that shown in Figs. 1-21. Thus, the spindle 58 may be arranged to rotate with a support for a signalling device such as the illustrated signalling device 53 (Fig. 13). At least a reference position of the first occlusion part 56 from which further positions can be determined by means of dead reckoning may therefore be determined. This reference position may, for example, be determined when the first occlusion part 56 is rotated over 360° prior to positioning the second occlusion part 57 and thereafter the first occlusion part 56.

An arrangement like that of the closure device 35 and sealing ring 34 (Fig. 10) may be used to seal off the valve chamber housing the regulating device 55 of Fig. 22.

The invention is not limited to the embodiments described above, which may be varied within the scope of the accompanying claims. The liquid treatment apparatus has been described throughout as one in which an incoming flow of liquid is split into two flows of liquid by the valve acting as a variable-ratio flow divider. It is also possible to position the valve downstream of the liquid treatment cartridge 2, so that the two second ports function as valve inlet ports and the one first port functions as a single outlet port of the valve. In that case, the liquid treatment cartridge 2 would have two inlet ports and two outlet ports or a single flow of untreated liquid would be split into two inside the cartridge 2 such that one bypasses the main bed 17 of liquid treatment material and the other passes through it. The arresting mechanism comprising the series of notches 62 may also be used in conjunction with the second occlusion part 31 shown in detail in Fig. 20.

### List of reference numerals

- 1: - head device
- 2: - liquid treatment cartridge
- 3: - inlet connector
- 4: - outlet connector
- 5: - cartridge head
- 6: - socket in head device
- 7a,b: - levers
- 8: - locking mechanism recess
- 9: - ridge
- 10: - locking segment
- 11: - cartridge outlet port
- 12: - upper cartridge inlet port
- 13: - lower cartridge inlet port
- 14: - upper socket outlet port
- 15: - lower socket outlet port
- 16: - socket inlet port
- 17: - main bed of liquid treatment material
- 18: - downstream retaining device
- 19: - upstream retaining device
- 20: - fall tube
- 21: - secondary bed of liquid treatment material
- 22: - conduit co-axial with fall tube
- 23: - valve body
- 24: - valve chamber
- 25: - valve inlet port
- 26: - 1^{st} valve outlet port
- 27: - 2^{nd} valve outlet port
- 28: - 1^{st} short conduit
- 29: - 2^{nd} short conduit
- 30: - 1^{st} occlusion part
- 31: - 2^{nd} occlusion part
- 32: - regulating device
- 33: - spindle
- 34: - sealing ring
- 35: - closure device
- 36: - socket in spindle
- 37: - electric motor spindle
- 38: - electric motor
- 39: - skirt on spindle
- 40: - planar radially extending section of spindle skirt
- 41: - axially extending reinforcement section of spindle skirt
- 42: - axial end section of spindle
- 43: - central axially extending spindle section
- 44a,b: - splines
- 45: - planar annular section of first occlusion part
- 46: - axially depending wall section of first occlusion part
- 47: - stepped radially outer wall of second occlusion part
- 48: - edge of radially outer wall
- 49: - socket in hub of second occlusion part
- 50a,b: - spline grooves
- 51: - inwardly facing central wall section of second occlusion part hub
- 52: - sensor
- 53: - signalling device
- 54: - signalling device bracket
- 55: - alternative regulating device
- 56: - first occlusion part
- 57: - second occlusion part
- 58: - spindle
- 59: - window
- 60: - first catch
- 61: - second catch
- 62: - series of notches

## Claims

1. Valve for a fluid treatment apparatus, including:
a body (23), having formed therein at least one first port (25) and at least two second ports (26,27); and
a regulating device (32;55), positioned between the first and second ports (25,26,27) in flow sense and including:
a first part (30;56) for occluding a path between the first port (25) and a first of the second ports (26,27) to an extent determined by a position along a range of positions of the first part (30;56),
a second part (31;57) for occluding a path between the first port (25) and a second of the second ports (26,27) to an extent determined by a position along a range of positions of the second part (31;57) and
a control member (33) for adjusting the position of the first part (30;56) in either of opposite directions along the range,
wherein the degrees of occlusion by each of the first and second parts (30,31 ;56,57) vary stepwise with their respective positions along the respective ranges, **characterised in that**
the second part (31;57) is journalled for relative movement with respect to the first part (30;56) along a range of relative positions and by
a catch mechanism between the first and the second parts (30,31 ;56,57) for entraining the second part (31;57) at at least one end point of the range of relative positions.

2. Valve according to claim 1,
wherein at least the control member (33) and the first and second parts (30,31;56,57) of the regulating device (32;55) are rotatably journalled, and
wherein the ranges of positions and relative positions of the first and second parts (30,31;30,57) are rotary positions.

3. Valve according to claim 2,
wherein the first and second ports (25,26,27) are provided in side wall sections presenting circle-cylindrical inner surface sections delimiting a chamber (24),
wherein the first and second parts (30,31) are arranged in the chamber (24), and
wherein the first and second parts (30,31;56,57) have radially outer walls (46,47) conforming to respective ones of the circle-cylindrical side wall inner surface sections.

4. Valve according to claim 3,
wherein the radially outer wall (46,47) of at least one of the first and second parts (30,31 ;56,57) is stepped at an axial end.

5. Valve according to claim 4,
wherein the radially outer walls (46,47) of the first and second parts (30,31) are stepped at facing respective axial ends, wherein the facing respective axial ends are spaced apart from each other in axial direction.

6. Valve according to claim 4 or 5,
wherein at least one of the radially outer walls (46,47) is stepped with at least two different step sizes, e.g. with step sizes increasing as the steps approach the axial end.

7. Valve according to any one of the preceding claims,
wherein the catch mechanism between the first and second parts (30,31) is provided by the control member (33).

8. Valve according to claim 7,
wherein the control member (33) includes a rotatably journalled spindle,
wherein the spindle (33) is provided with at least one spline (44), arranged within a respective groove in the second part (31), and wherein the at least one groove allows a range of rotary movement of the spindle (33) relative to the second part (31).

9. Valve according to any one of the preceding claims,
provided with at least one detent for arresting movement of at least the second part (31;57) relative to the valve body.

10. Method of operating a valve according to any one of the preceding claims, including causing a position of the second part (31;57) of the regulating device (32;55) to be adjusted by causing the control member (33) to be moved.

11. Method according to claim 10,
wherein the valve is adjusted to a certain configuration by carrying out a first step of causing the position of the second part (31;57) to be adjusted by causing the control member (33) to be moved such that the first part (30;56) is moved in one direction along the range of positions of the first part (30;56) followed by a second step of causing the position of only the first part (30;56) to be adjusted by causing the control member (33) to be moved such that the first part (30;56) is moved in the opposite direction.

12. Method according to claim 11,
wherein the regulating device (32;55) is rotatably journalled and the ranges of positions and relative positions are rotary positions, and
wherein the control member (33) is rotated over at least 360° in the first step.

13. System for operating a valve according to any one of claims 1-9, including:
a valve according to any one of claims 1-9;
an actuator (38) for moving the control member (33); and
a device for controlling the actuator (38),
wherein the controlling device is configured to cause a position of the second part (31;57) to be adjusted by controlling the actuator (38) to move the control member (33).

14. System according to claim 13,
wherein the controlling device is configured to adjust the valve to a certain configuration by carrying out a first step of causing the position of the second part (31;57) to be adjusted by causing the control member (33) to be moved such that the first part (30;56) is moved in one direction along the range of positions of the first part (30;56) followed by a second step of causing the position of only the first part (30;56) to be adjusted by causing the control member (33) to be moved such that the first part (30;56) is moved in the opposite direction.

15. Fluid treatment apparatus, including:
an inlet (3) for receiving a fluid to be treated;
a fluid treatment device (2) including at least one treatment part (17,21);
an outlet (4) for providing a mix of fluid led through a certain one of the at least one treatment parts (17,21) and of fluid led past the certain treatment part (17); and
a valve according to any one of claims 1-9 for adjusting a proportion of fluid led past the certain treatment part (17) in the mix.

## Patentansprüche

1. Ventil für eine Fluidbehandlungsvorrichtung, umfassend:
einen Körper (23), in dem mindestens eine erste Öffnung (25) und mindestens zwei zweite Öffnungen (26, 27) ausgebildet sind; und
eine Steuereinrichtung (32; 55), die zwischen der ersten und den zweiten Öffnungen (25, 26, 27) in eine Strömungsrichtung angeordnet ist und umfasst:
ein erstes Teil (30; 56) zum Verschließen eines Pfades zwischen der ersten Öffnung (25) und einer ersten der zweiten Öffnungen (26, 27) in einem Maße, das durch eine Position entlang eines Bereichs von Positionen des ersten Teils (30; 56) bestimmt wird,
ein zweites Teil (31; 57) zum Verschließen eines Pfades zwischen der ersten Öffnung (25) und einer zweiten der zweiten Öffnungen (26, 27) in einem Maße, das durch eine Position entlang eines Bereichs von Positionen des zweiten Teils (31; 57) bestimmt wird, und
ein Stellelement (33) zum Einstellen der Position des ersten Teils (30; 56) in einer von gegenüberliegenden Richtungen entlang des Bereichs,
wobei die Okklusionsgrade durch jedes des ersten und des zweiten Teils (30, 31; 56, 47) schrittweise mit ihren jeweiligen Positionen entlang der jeweiligen Bereiche variieren, **dadurch gekennzeichnet, dass**
das zweite Teil (31; 57) für eine relative Bewegung in Bezug auf das erste Teil (30; 56) entlang eines Bereichs relativer Positionen gelagert ist und durch
einen Arretiermechanismus zwischen dem ersten und dem zweiten Teil (30, 31; 56, 57) zur Mitnahme des zweiten Teils (31; 57) an mindestens einem Endpunkt des Bereichs relativer Positionen.

2. Ventil nach Anspruch 1,
wobei mindestens das Stellelement (333) und das erste und zweite Teil (30, 31; 56, 57) der Steuereinrichtung (32; 55) drehbar gelagert sind und
wobei die Bereiche von Positionen und relativer Positionen des ersten und zweiten Teils (30, 31; 30, 57) Drehpositionen sind.

3. Ventil nach Anspruch 2,
wobei die erste und die zweiten Öffnungen (25, 26, 27) in Seitenwandabschnitten vorgesehen sind, die kreiszylindrische Innenflächenabschnitte darstellen, die eine Kammer (24) begrenzen,
wobei das erste und das zweite Teil (30, 31) in der Kammer (24) angeordnet sind und
wobei das erste und zweite Teil (30, 31; 56, 57) radial äußere Wände (46, 47) aufweisen, die entsprechenden der kreiszylindrischen Innenflächenabschnitte entsprechen.

4. Ventil nach Anspruch 3,
wobei die radial äußere Wand (46, 47) des mindestens einen des ersten und zweiten Teils (30, 31; 56, 57) an einem axialen Ende abgestuft ist.

5. Ventil nach Anspruch 4,
wobei die radial äußeren Wände (46, 47) des ersten und zweiten Teils (30, 31) an zugewandten, jeweiligen axialen Enden abgestuft sind, wobei die zugewandten, jeweiligen axialen Enden voneinander in axialer Richtung beabstandet sind.

6. Ventil nach Anspruch 4 oder 5,
wobei mindestens eine der radial äußeren Wände (46, 47) mit mindestens zwei unterschiedlichen Stufengrößen abgestuft ist, z. B. mit zunehmenden Stufengrößen, wenn die Stufen sich dem axialen Ende nähern.

7. Ventil nach einem der vorhergehenden Ansprüche,
wobei der Arretiermechanismus zwischen dem ersten und dem zweiten Teil (30, 31) durch das Stellelement (33) gebildet wird.

8. Ventil nach Anspruch 7,
wobei das Stellelement (33) eine drehbar gelagerte Spindel umfasst,
wobei die Spindel (33) mit mindestens einer Rippe (44) bereitgestellt ist, die innerhalb einer jeweiligen Nut in dem zweiten Teil (31) angeordnet ist, und wobei die mindestens eine Nut einen Bereich der Drehbewegung der Spindel (33) relativ zu dem zweiten Teil (31) ermöglicht.

9. Ventil nach einem der vorhergehenden Ansprüche,
das mit mindestens einer Arretierung zum Arretieren einer Bewegung von mindestens dem zweiten Teil (31; 57) relativ zu dem Ventilkörper versehen ist.

10. Verfahren zum Betätigen eines Ventils nach einem der vorhergehenden Ansprüche, welches umfasst, dass bewirkt wird, dass eine Position des zweiten Teils (31; 57) der Steuereinrichtung (32; 55) neu eingestellt wird, indem bewirkt wird, dass das Stellelement (33) bewegt wird.

11. Verfahren nach Anspruch 10,
wobei das Ventil auf eine bestimmte Konfiguration eingestellt wird, indem ein erster Schritt ausgeführt wird, in dem bewirkt wird, dass die Position des zweiten Teils (31; 57) eingestellt wird, indem bewirkt wird, dass das Stellelement (33) bewegt wird, sodass das erste Teil (30; 56) in eine Richtung entlang des Bereichs von Positionen des ersten Teils (30; 56) bewegt wird, gefolgt von einem zweiten Schritt, in dem bewirkt wird, dass die Position nur des ersten Teils (30; 56) eingestellt wird, indem bewirkt wird, dass das Stellelement (33) bewegt wird, sodass das erste Teil (30; 56) in die entgegengesetzte Richtung bewegt wird.

12. Verfahren nach Anspruch 11,
wobei die Steuereinrichtung (32; 55) drehbar gelagert ist und die Bereiche von Positionen und relativen Positionen Drehpositionen sind und
wobei das Stellelement (33) in dem ersten Schritt über mindestens 360° gedreht wird.

13. System zum Betätigen eines Ventils nach einem der Ansprüche 1-9, umfassend:
ein Ventil nach einem der Ansprüche 1-9;
einen Aktuator (38) zum Bewegen des Stellelements (33); und
eine Einrichtung zum Steuern des Aktuators,
wobei die Stelleinrichtung dazu konfiguriert ist, zu bewirken, dass eine Position des zweiten Teils (31; 57) durch das Steuern der Betätigungseinrichtung (38) zum Bewegen des Stellelements (33) neu eingestellt wird.

14. System nach Anspruch 13,
wobei die Steuereinrichtung dazu konfiguriert ist, das Ventil auf eine bestimmte Konfiguration einzustellen, indem ein erster Schritt ausgeführt wird, in dem bewirkt wird, dass die Position des zweiten Teils (31; 57) eingestellt wird, indem bewirkt wird, dass das Stellelement (33) bewegt wird, sodass das erste Teil (30; 56) in eine Richtung entlang des Bereichs von Positionen des ersten Teils (30; 56) bewegt wird, gefolgt von einem zweiten Schritt, in dem bewirkt wird, dass die Position nur des ersten Teils (30; 56) eingestellt wird, indem bewirkt wird, dass das Stellelement (33) bewegt wird, sodass das erste Teil (30; 56) in die entgegengesetzte Richtung bewegt wird.

15. Fluidbehandlungseinrichtung, umfassend:
einen Einlass (3) zum Aufnehmen eines zu behandelnden Fluids;
eine Fluidbehandlungsvorrichtung (2), die mindestens ein Behandlungsteil (17, 21) beinhaltet;
einen Auslass (4) zum Bereitstellen einer Mischung von Fluid, das durch ein bestimmtes des mindestens einen Behandlungsteils (17, 21) geleitet wird, und von Fluid, das durch das bestimmte Behandlungsteil (17) geleitet wird, und
ein Ventil nach einem der Ansprüche 1 bis 9 zum Einstellen eines Anteils von Fluid, das durch das bestimmte Behandlungsteil (17) in der Mischung geleitet wird.

## Revendications

1. Soupape pour un appareil de traitement de fluide, comprenant :
un corps (23) dans lequel sont formés au moins un premier orifice (25) et au moins deux seconds orifices (26, 27) ; et
un dispositif de régulation (32 ; 55), positionné entre les premier et seconds orifices (25, 26, 27) dans une direction d'écoulement et comprenant :
une première partie (30 ; 56) pour bloquer un trajet entre le premier orifice (25) et un premier parmi les seconds orifices (26, 27) dans une mesure déterminée par une position le long d'une plage de positions de la première partie (30 ; 56),
une seconde partie (31 ; 57) pour bloquer un trajet entre le premier orifice (25) et un second parmi les seconds orifices (26, 27) dans une mesure déterminée par une position le long d'une plage de positions de la seconde partie (31 ; 57), et
un élément de commande (33) pour ajuster la position de la première partie (30 ; 56) dans l'une ou l'autre des directions opposées le long de la plage,
les degrés de blocage par chacune des première et seconde parties (30, 31 ; 56, 57) variant progressivement avec leurs positions respectives le long des plages respectives, **caractérisée en ce que**
la seconde partie (31 ; 57) est montée pour réaliser un mouvement relatif par rapport à la première partie (30 ; 56) le long d'une plage de positions relatives, et par
un mécanisme de capture entre les première et seconde parties (30, 31 ; 56, 57) pour entraîner la seconde partie (31 ; 57) au niveau d'au moins un point d'extrémité de la plage de positions relatives.

2. Soupape selon la revendication 1, dans laquelle
au moins l'élément de commande (33) et les première et seconde parties (30, 31 ; 56, 57) du dispositif de régulation (32 ; 55) sont montés de manière rotative, et
les plages de positions et de positions relatives des première et seconde parties (30, 31 ; 56, 57) sont des positions de rotation.

3. Soupape selon la revendication 3,
dans laquelle les premier et seconds orifices (25, 26, 27) sont prévus dans des sections de paroi latérale présentant des sections de surface interne de cercle cylindrique délimitant une chambre (24),
les première et seconde parties (30, 31) étant disposées dans la chambre (24), et
les première et seconde parties (30, 31 ; 56, 57) ayant des parois radialement externes (46, 47) se conformant aux sections respectives des sections de surface interne de paroi latérale de cercle cylindrique.

4. Soupape selon la revendication 3,
dans laquelle la paroi radialement externe (46, 47) d'au moins une parmi les première et seconde parties (30, 31 ; 56, 57) est étagée à une extrémité axiale.

5. Soupape selon la revendication 4,
dans laquelle les parois radialement externes (46, 47) des première et seconde parties (30, 31) sont étagées aux extrémités axiales respectives se faisant face, les extrémités axiales respectives se faisant face étant espacées l'une de l'autre dans la direction axiale.

6. Soupape selon la revendication 4 ou 5,
dans laquelle au moins une des parois radialement externes (46, 47) est étagée avec au moins deux tailles d'échelon différentes, par exemple avec des tailles d'échelon augmentant à mesure que les échelons s'approchent de l'extrémité axiale.

7. Soupape selon l'une quelconque des revendications précédentes,
dans laquelle le mécanisme de capture entre les première et seconde parties (30, 31) est fourni par l'élément de commande (33).

8. Soupape selon la revendication 7,
dans laquelle le mécanisme de commande (33) comprend une tige montée de manière rotative,
la tige (33) comprenant au moins une cannelure (44), prévue à l'intérieur d'une rainure respective dans la seconde partie (31), et
l'au moins une rainure permettant une plage de mouvement de rotation de la tige (33) par rapport à la seconde partie (31).

9. Soupape selon l'une quelconque des revendications précédentes,
comprenant au moins un cran pour arrêter un mouvement au moins de la seconde partie (31 ; 57) par rapport au corps de soupape.

10. Procédé pour opérer une soupape selon l'une quelconque des revendications précédentes, comprenant amener une position de la seconde partie (31 ; 57) du dispositif de régulation (32 ; 55) à être ajustée en amenant l'élément de commande (33) à être déplacé.

11. Procédé selon la revendication 10,
dans lequel la soupape est ajustée dans une certaine configuration en réalisant une première étape pour amener la position de la seconde partie (31 ; 57) à être ajustée en amenant l'élément de commande (33) à être déplacé de telle sorte que la première partie (30 ; 56) est déplacée dans une direction le long de la plage de positions de la première partie (30 ; 56), suivie d'une seconde étape pour amener la position uniquement de la première partie (30 ; 56) à être ajustée en amenant l'élément de commande (33) à être déplacé de telle sorte que la première partie (30 ; 56) est déplacée dans la direction opposée.

12. Procédé selon la revendication 11,
dans lequel le dispositif de régulation (32 ; 55) est monté de manière rotative et les plages de positions et de positions relatives sont des positions de rotation, et
l'élément de commande (33) étant tourné sur au moins 360° dans la première étape.

13. Système pour opérer une soupape selon l'une quelconque des revendications 1 à 9, comprenant :
une soupape selon l'une quelconque des revendications 1 à 9 ;
un actionneur (38) pour déplacer l'élément de commande (33) ; et
un dispositif pour commander l'actionneur (38),
le dispositif de commande étant configuré pour amener une position de la seconde partie (31 ; 57) à être ajustée en commandant l'actionneur (38) pour déplacer l'élément de commande (33).

14. Système selon la revendication 13,
dans lequel le dispositif de commande est configuré pour ajuster la soupape dans une certaine configuration en réalisant une première étape pour amener la position de la seconde partie (31 ; 57) à être ajustée en amenant l'élément de commande (33) à être déplacé de telle sorte que la première partie (30 ; 56) est déplacée dans une direction le long de la plage de positions de la première partie (30 ; 56), suivie d'une seconde étape pour amener la position uniquement de la première partie (30 ; 56) à être ajustée en amenant l'élément de commande (33) à être déplacé de telle sorte que la première partie (30 ; 56) est déplacée dans la direction opposée.

15. Appareil de traitement de fluide, comprenant :
une entrée (3) pour recevoir un fluide à traiter ;
un dispositif de traitement de fluide (2) comprenant au moins une partie de traitement (17, 21) ;
une sortie (4) pour fournir un mélange de fluide acheminé à travers une certaine partie parmi l'au moins une partie de traitement (17, 21) et de fluide acheminé au-delà de ladite partie de traitement (17) ; et
une soupape selon l'une quelconque des revendications 1 à 9 pour ajuster une proportion de fluide acheminé au-delà de ladite partie de traitement (17) dans le mélange.
